# EUROPEAN PATENT SPECIFICATION

(11) **EP 1 349 902 B1**
(45) Date of publication and mention of the grant of the patent: **08.05.2013**
(21) Application number: 01273363.0
(22) Date of filing: 11.12.2001
(51) Int. Cl.: C09K 3/18, C09K 3/14, E01H 10/00

(54) **A METHOD FOR APPLYING A FRICTION INCREASING ABSORPTIVE AGENT TO SNOW OR ICE COVERED SURFACES**
VERFAHREN ZUR ANWENDUNG EINES REIBUNGSERHÖHENDEN ABSORPTIONSMITTELS AUF SCHNEE- ODER EISBEDECKTEN FLÄCHEN
PROCEDE D'APPLICATION D'UN AGENT ABSORBANT AUGMENTANT LE FROTTEMENT A DES SURFACES RECOUVERTES DE NEIGE OU DE GLACE

(30) Priority: 13.12.2000 NO 20006344
(43) Date of publication of application: 08.10.2003
(73) Proprietor: Berge, Stein D., 1380 Heggedal (NO)
(72) Inventor: Berge, Stein D., 1380 Heggedal (NO)
(74) Representative: Lerwill, John
(86) International application number: PCT/NO2001/000490
(87) International publication number: WO 2002/057388

(56) References cited:
- EP-A1- 0 210 972
- DE-A1- 3 142 204
- DE-A1- 3 732 657
- DE-B- 1 132 174
- US-A- 4 108 669

## Description

Described herein is an agent intended to be spread on slippery surfaces covered by ice or snow, surfaces covered by wet leaves or freshly paved surfaces covered by water. The invention relates to a method for spreading the agent on ice or snow covered surfaces. Described herein is the use of a chemical product as a friction increasing agent on surfaces covered with snow or ice.

### Background/State of the Art Technology

Various types of friction increasing agents to be spread on slippery surfaces are known in the art, particularly agents intended for use on ice or snow covered surfaces.

There are several known problems in this area. The conditions under which the agent is to be spread varies widely, e.g. hard ice several degrees below 0 °C, temperatures above zero wherein the ice is covered with water, supercooled rain that freezes the very moment it reaches the ground, or varying layers of ice and snow, from a few millimetres to several centimetres.

Thus, it is difficult or impossible to find an agent that works well under all conditions. In this connection it should be noted that sites that need such as agents during winter time belong to such a different categories as private areas, driveways and roads, public roads, airports and connected areas, which all have quite different requirements and very different equipment available for containing and spreading the agent. On airports a very high degree of safety is required while the acceptance of agents that may cause corrosion is extremely low. On private areas there is usually a requirement that spreading can be performed by hand or with very simple mechanical equipment.

On ordinary roads and in private areas it is quite common to spread sand, as the intention is that the sand particles shall attach to the slippery surface and provide an increased friction. This works under some conditions, but there are situations where it does not work well, e.g. if it is cold and the surface hard, the sand does not attach well to the surface, and it is rapidly blown away by the turbulence of passing vehicles. As an alternative to sand, pebble (gravel) is used, which is heavier and does not blow away as easily. On the other hand pebble has the disadvantage that it causes a greater degree of damage to vehicles. Lately the tendency is to use more pebble gravel and less sand.

The technology of spreading sand has, however, developed further, e.g. the sand is spread after heating or spread together with hot steam or hot water. This technique makes the sand attach better to the surface and therefore provides a better friction, the disadvantage being that it requires more costly equipment for its application, plus costly heating / evaporation of the water. This kind of spreading only works well on rather thick layers of ice. There is furthermore an indication that coarse sand with sharp edges frozen to the ice, may cause disproportionately high tyre wear.

At temperatures close to 0 °C, and particularly in urban regions, it is common to spread salt that provides a reduction of the freezing point in order to make the ice/ snow melt away completely, so that tyre contact with the pavement below is established. The disadvantage is that it requires a comparatively large amount of salt, which is environmentally questionable, and it works well only in a narrow temperature range. In situations with thicker layers of ice or snow or at lower temperatures it may work in contradiction to its intention, melting only part of the layer that it is intended to remove and making the surface even more slippery. In addition, the use of salt increases corrosion of the vehicles.

Many friction increasing agents and melting agents are available for private (personal) use. In addition to the agents used on public roads, comminuted Leca gravel and shell sand are used extensively. As melting agents there are different types of salts available with various side effects dependent upon the type. On hard and smooth ice, the dry sand and pebble gravel do not work well, as they are not able to attach well to the surface, hence the intended friction for a rubber tyre is not obtained. The problems related to the least expensive salts (e.g. NaCl) are that they erode concrete, attack iron and steel constructions, erode footwear and are generally hazardous to the environment.

In US-A-108669 there is described a snow and ice control composition consisting of a particulate calcined montmorillonite clay having a particle size from 0.25mm to 5mm and containing 1-20% by weight ammonium nitrate, and 5 to 9% by weight water, the composition being prepared by spraying an aqueous solution of ammonium nitrate onto the clay. The composition is liberally sprinkled upon the snow and ice covered surfaces.

In DE-A-3142204 these is proposed a salt free gritting material for use on icy or snow covered paths or roads, consisting of expanded clay grains with predominantly broken grains and with a mean grain diameter of 1.5 to 5mm.

EP 0210972 describes a process for treating zeolites to produce a composition used in de-icing and the prevention of slipperiness. The treatment involves the mixture of zeolites with a reduced moisture content with an alkali salt, such as Glauber's and with water, preferably sea water.

### Objective

It is thus an object of the invention to provide a friction increasing agent that may be utilized under more varying conditions than previously available agents.

It is a further object to provide a friction increasing agent suitable for ice/hard snow that provides a friction sufficiently high to allow vehicles to drive with acceptable safety margins without causing high tyre wear, and which is also useful as a friction increasing agents for pedestrians.

It is a further object to provide a friction increasing agent that provides a mainly constant friction independent of e.g. the temperature conditions when spread.

It is a still further object to provide a friction increasing agent that stays for a longer period of time on the surface to which it is spread, and therefore does not need as frequent distribution intervals as do most other friction increasing agents.

### The Invention

In accordance with one aspect of the present invention there is provided a method of scattering a salt free friction increasing agent on surfaces covered with ice or snow, comprising the step of scattering the agent on a surface, wherein the agent includes granules of a salt free friction increasing agent of a water durable, silicate absorber material chosen from the group consisting of calcined diatomaceous earth (CDE), calcined bentonite, Sepiolite and expanded perlite, and the step of applying an amount of water to the surface simultaneously with the agent or soon after the agent is applied, wherein the amount of water applied is between the moisture limit of the absorber material and the absorption limit of the absorber material.

Preferred embodiments of the invention are disclosed by the dependent claims.

Absorber materials of the type employed by the invention possess the characterizing feature that they exhibit an outer, rigid structure that covers internal, porous or microporous voids. The absorber materials are also durable, which means that they do not easily crumble into smaller particles even when exposed to liquids.

As stated the absorber granules may be calcined diatomaceous earth (CDE), Sepiolite, expanded perlite (rapidly calcined rhyolite/pitchstone), or calcined bentonite. Burning/calcining the absorber material provides the granules with the strength required to withstand mechanical compressive loads without being crushed, and to endure lying in a moist environment without decomposing. The friction increasing agent according to the invention is environmentally friendly and does not contribute to enhanced corrosion of vehicles, bridges or the like.

Used correctly the friction increasing agent of the invention may also reduce the amount of dust suspended in the air along the roads, as the need for studded tyres is reduced, and so is the use of fine-grained sand.

Use of a mixture of the absorber material and a little water (liquid) works well as a friction increasing agent for slippery surfaces, especially ice and hard snow. In tests performed, CDE with an addition of water was used mostly.

Tests show that application of a friction increasing agent according to the present invention provides the required friction on ice and hard snow. In particular, when an adapted amount of liquid in the form of pure water is added, conditions are achieved by which the friction increasing agent immediately freezes to the ice and forms a sandpaper like surface. A very even and satisfactory friction that is independent of the temperature conditions, is thereby obtained. In relation to car traffic the friction obtained is at a level that from a safety point of view is fully acceptable at all temperature conditions, but not so high that tyre wear becomes disproportionately high.

Although outside of the scope of the invention the friction increasing agent described herein may also advantageously be used on the surfaces that are slippery for other reasons, like oil or diesel leakages, fats or fallen leaves (plant juices), due to the absorbing capability of the friction increasing agent.

The moisture limit of the agent defines the amount of liquid that may be added to the absorber before its surface goes from having a dry outside (the granules feels dry on their outer surface and no moisture rubs off when the granules are touched) to a moist outside. This limit is in the range of 1/3 to 1/2 compared to the agent's absorption limit.

**Table 1. Some empirical data for tested absorbers.**

| **Friction increasing agent** | **Grain size (mm)** | **Absorption limit** | **Moisture limit** | **Density** |
|---|---|---|---|---|
| Sepiolite | 0-0.3 | 0.6 | 0.2 | 0.65 |
| CDE | 0-1 | 0.8 | 0.35 | 0.5 |

| | | | | |
|---|---|---|---|---|
| The numbers have an estimated uncertainty of 10% | | | | |

Some simple measurements of absorption capability (limit) were made on some further materials according to the invention. For natural zeolites values comparable with the value for Sepiolite were found. For perlite and calcined bentonite values a little lower than and a little higher than the values for Sepiolite were found respectively, while CDE had the highest values among the measured materials.

For particular applications the friction increasing agent may be used together with antifreeze liquids, e.g. alcoholic liquids, propylene glycol, potassium acetate etc. The area of application and the conditions for the respective use will determine whether or not such a combination will be more favourable than use of the agent according to the invention alone.

For applications within the private (personal) market it may be appropriate to extend the function of the agent to also include absorption of different kinds of liquid spills. For such purposes the agent should not contain more liquid than required to bind the dust, thereby maintaining an absorption capacity as high as possible. For CDE this value is between approximately 4 and 12 % by volume.

The friction increasing agent may as mentioned be present in a (completely) dry state or containing a certain amount of water, depending on the application. The amount of liquid should be less than the moisture limit of the agent, else the granules will tend to freeze to one another and build "lumps" when the temperature sinks below 0 °C.

For the professional market the actual conditions during transportation and spreading decide the amount of water to be added under production, and the amount of water to be added when the agent is spread. Tests show that the ratio of total amount of water to amount of friction increasing agent is an important parameter in the goal of achieving the best friction possible. Subsequent to its spreading/ application it is preferred, somewhat conditional on the surface, that the amount of water is in the range between the moisture limit and the absorption limit.

For the personal market it is preferred to include as little water as possible, only enough to bind the dust, as this ensures that the agent may then also be useful for the absorption of spilt oils and other kinds of liquid.

The materials assessed and/ or tested are calcined diatomaceous earth (CDE), Sepiolite, expanded Perlite and naturally occurring Zeolites; the latter being outside the scope of the present invention. CDE has been used as the main raw material for the actual tests.

With regard to the varying conditions under which the tests have been performed, it should be noted that the friction increasing agent according to the invention will have a somewhat different character depending on the "phase" it is in. The "modus operandi" of the agent may be divided into four different phases: dry phase, wet phase, frozen phase and back to dry phase. According to the invention the agent is spread in a wet state (particularly for the professional market) and goes through three phases, the wet phase, the frozen phase and the dry phase.

Dry phase In the dry phase friction is comparatively high, and it is significantly higher than for dry, fine-grained sand in most of the temperature areas from -0 to -5 °C. It functions in many cases much better than sand (see table 3e and 3g). When the agent is dry, strong winds (turbulence behind vehicles) will move the granules, which means that the agent is not very useful in this state on roads with heavy traffic. In driveways, on sidewalks, stairs etc., the agent functions very well.

Wet phase: The agent is presented in a wet state by adding water when the agent is spread, or as a consequence of the ice melting or water additions in other manners. In the wet phase the agent provides a friction in the magnitude of the friction of wet sand, which means that it is significantly poorer than in the dry state, but not poorer than the friction of sand (see table 3b, c and d). In wet condition, however, the agent attaches better to the surface than it does in the dry state.

Frozen phase: (sandpaper phase) If the agent is wet and has only had pure water added, while the temperature of the ice is below 0 °C, the granules will freeze to the ice immediately (a maximum of 30 seconds at temperatures close to 0 °C and within 5-10 seconds if the temperature is in the range of -10 to -15 °C). The friction in this phase may for the lowest temperatures be compared to the one for sand frozen to ice, but for temperatures closer to 0 °C the friction provided by the agent according to the invention is significantly higher (the sand grains seem to come loose near 0 °C), and this is even over a temperature scale below - 0 °C (see table 3b). Compared to the dry agent it is almost twice as high, except for the value at -0 °C (see table 3b and 3e). The friction varies depending on the amount of water added (tests performed in addition to the ones shown in table 3) and it increases with the amount of granules per surface area/ the amount spread (see table 3b).

Back to dry phase: If the agent is wet or frozen, it will, depending on the weather and the temperature, eventually dry out and return to a dry condition. Also in dry condition the agent will easily follow the water during rainfall. The tested absorbers are environmentally neutral and will not be poisonous to the environment unless liquids have been added that are poisonous.

A method for the measurement of friction in full scale (ASTM Designation E 1859-97 (USA)) providing the entire friction curve/ slip curve, is described below. A simplified method for testing in reduced scale, which was used to test embodiments of the friction increasing agent according the invention, is also presented.

Said ASTM method has been adapted in Norway as a standard for the National Road Administration. The basis for the measurements is the general friction coefficient (µ=Fh/Fv), which is the ratio between horizontal friction force (the friction between e.g. the wheel and the ground below = Fh) and the total weight / force exerted by the wheel against the ground (the vertical force). The friction coefficient µ is normally a number between 0 and 1, where 0 means no friction and 1 a maximum of friction (a µ of 1 means that the horizontal and the vertical force are equally large). The friction coefficient may in some cases be larger than 1, implying that a kind of "toothed gear" effect or "sandpaper" effect is present (see table 3h).

The method measures the so called slip curve, which is all µ values from the wheel initiates a braking (the wheel speed in relation to the surface below is reduced in a linear manner) until the wheel has reached a standstill position. The maximum value (µₘₐₓ) of the slip curve is commonly used as a measurement and designated the friction number. The equipment used for measurement according to the ASTM method is very expensive and the existing equipment is only designed to perform measurements outdoors on roads/ tracks.

A rectangular piece of a car tyre/ summer tyre (approx. 8 cm x 12.5 cm = 200 cm²) was prepared. Weights were glued to it to hold it flat. The total weight of this arrangement was approximately 0.8 kg. The piece of tyre was thereafter connected to a suitable spring scale that was calibrated from 0 to 12 hg (12 hg = 1.2 kg). The readings were converted to µ values where µ = x hg/ 8 hg. It was assumed an uncertainty for the readings of +/- 10%. Most of the readings were conducted in cold storage with control of the temperature in the room and of the ice surface.

### Friction scale; Some Reference Values

The general definition of friction, as mentioned above, is defined by the equation µ=Fh/Fv, where Fh represents the horizontal friction force (tested on a level surface), and Fv representing the vertical pressure (the force) against the surfaces, µ being the coefficient of friction. The National Road Administration calculates different values of µ for roads as shown by table 2. The numbers are found in "Temahefte til håndbok - 111. Vedlikeholdsstandard for riksveier (1993) Statens Vegvesen, Vegdirektoratet, driftsavdelingen, vedlikeholdskontoret. "

(The braking distance does not include the reaction distance, which is about 14 m at 50 km/h.)

**Table 2. Connection between coefficient of friction, state of the roads, braking distance, driving conditions, safety and procedure of sprinkling(of friction increasing agents).**

| **µ** | **Driving conditions** | **Braking distance at 50 km/t** | **Driving conditions and safety** | **Sprinkling procedure** |
|---|---|---|---|---|
| < 0.1 | wet ice or snow | not defined | impossible/ irresponsible | continuous sprinkling |
| 0.1-0.15 | winter conditions 0 C | 66 m | very slippery, low safety | continuous sprinkling |
| 0.15-0.25 | winter conditions | 39m | slippery | sprinkling on hazardous places |
| 0.30-0.40 | intermediate conditions | 33 m | satisfactory | no sprinkling |
| 0.40-0.50 | intermediate conditions | 25 m | well satisfactory | ---------" -------- |
| 0.50-0.60 | summer conditions | 16 m | very satisfactory | ---------" -------- |
| 0.60-0.70 | dry summer conditions | 14 m | excellent | ---------" -------- |

| | | | | |
|---|---|---|---|---|
| The stated braking length applies to the coefficient of friction that is underlined. | | | | |

Two types of friction measurements for different mixtures of the agent were conducted, measurement in the inventors cold room and measurements performed by Teknologisk Institutt (TI) (*i.e. Technological Institute* in Norway).

### Measurements in a Temperature Controlled Chamber and Some Situations Outdoors with Simplified Method

The content of table 3 is explained as follows: Temperature (*Temp*) is stated in °C on the surface of the ice. -0 means in the range -0.1 to -0.5 °C and +0 means +0.1 til +0.5 °C.

*Surface* defines the friction agent used and type of support or ground. *Amount*/ *m²* indicates how much agent was used in cm³ on a surface of 1 m². *F coeff start* is the coefficient of friction (µ) measured immediately before the rubber piece started to slide. The purpose of the factor is to provide an indication of e.g. the starting problems that may be experienced with the different friction increasing agents. This value is also included for the other measurements. The uncertainty of the measurements of the µ-values where only one number is indicated, is estimated to +/- 0.05. *F coeff start* may be compared with - and gives a certain indication of - the maximum point of the friction curve according to ASTM standard measurements. *F coeff slide* gives the coefficient of friction that is measured when the rubber piece slides with even speed over the surface. This should be indicative of the last point of measurement of the slip curve according to ASTM standard measurements, and the reference by the National Road Administration.

The process of manufacturing a frozen agent was conducted with a hand shower (1 liter plastic bottle) and tap water, the amount of water distributed being registered and controlled. Too much water reduced the friction (water-/ ice layer covering the granules) and too little water made the granules come loose and move on top of the surface, also resulting in a reduced friction. The optimal amount of water for both types of sand proved to be 30-50 vol-% with respect to the amount of sand, while for the agent according to the invention the numbers are 50-80 vol-%. At -15 °C the agents froze to the surface in a period of 10-20 seconds, and at -0 °C it took 20-30 seconds to produce the sandpaper effect.

The tables 3 (a-h) show results of measurements of friction with the simplified method for relevant friction increasing agents and surfaces.

**Table 3a. Measurements on uncovered ice**

| **Temp°C** | **Surface** | **F. coeff. start** | **F. coeff. slide** | **Remarks** |
|---|---|---|---|---|
| -15 | Uncovered, somewhat uneven ice | 0.5 - 0.55 | 0.25 | No agent |
| - 5 | Uncovered, somewhat uneven ice | 0.4 - 0.5 | 0.2 - 0.25 | No agent |
| -0 | Uncovered, somewhat uneven ice | 0.25 - 0.3 | 0.1 - 0.15 | No agent |
| +0 | Uncovered, somewhat uneven ice | 0.2 - 0.25 | 0.08 - 0.1 | No agent |

**Table 3b. Measurements of frozen and melted agent (CDE with 5 vol.% water) on ice.**

| **Temp °C** | **Surface** | **Amount per m²** | **F. coeff. start** | **F. coeff. slide** | **Remarks** |
|---|---|---|---|---|---|
| -15 | Agent frozen to ice | 0.5 | 0.65 - 0.7 | 0.4 - 0.45 | |
| -15 | -------------" ------------ | 1.5 | 0.7 - 0.75 | 0.45 - 0.5 | |
| -5 | -------------" ------------ | 0.5 | 0.65 | 0.4 - 0.45 | |
| -5 | -------------" ------------ | 1.5 | 0.7 | 0.45 | |
| -0 | -------------" ------------ | 0.5 | 0.65 | 0.4 - 0.45 | |
| -0 | -------------" ------------ | 1.5 | 0.7 - 0.75 | 0.45 -0.5 | |
| +0 | Agent with water on ice | 0.5 | 0.5 | 0.25 - 0.3 | |
| +0 | -------------" ------------ | 1.5 | 0.5 | 0.25 - 0.3 | |

**Table 3c. Measurements of frozen and melted, coarse sand (0-4 mm crushed claystone with sharp edges) on ice.**

| **Temp °C** | **Surface** | **Amount per m²** | **F. coeff. start** | **F. coeff. slide** | **Remarks** |
|---|---|---|---|---|---|
| -15 | Coarse sand frozen to ice | 0.5 | 0.7 - 0.75 | 0.5 - 0.55 | |
| -15 | -------------" ------------ | 1.5 | 0.9 - 1.0 | 0.65 - 0.75 | |
| -5 | -------------" ------------ | 0.5 | 0.7 | 0.45 - 0.5 | |
| -5 | -------------" ------------ | 1.5 | 0.9 | 0.65 | |
| -0 | -------------" ------------ | 0.5 | 0.65 | 0.4 - 0.45 | |
| -0 | -------------" ------------ | 1.5 | 0.7 | 0.45 | |
| +0 | Coarse sand w/water on ice | 0.5 | 0.4 | 0.25 | |
| +0 | -------------" ------------ | 1.5 | 0.5 | 0.3 | |

**Table 3d. Measurements of frozen and melted, fine sand (0-2 mm sand with round edges ) on ice.**

| **Temp °C** | **Surface** | **Amount per m²** | **F. coeff. start** | **F. coeff. slide** | **Remarks** |
|---|---|---|---|---|---|
| -15 | Fine sand frozen to ice | 0.5 | 0.65 | 0.4 | |
| -15 | -------------" ------------ | 1.5 | 0.8 | 0.5 | |
| -5 | -------------" ------------ | 0.5 | 0.65 | 0.3 - 0.4 | |
| -5 | -------------" ------------ | 1.5 | 0.75 | 0.45 | |
| -0 | -------------" ------------ | 0.5 | 0.55 | 0.25 - 0.3 | |
| -0 | -------------" ------------ | 1.5 | 0.65 | 0.3 - 0.4 | |
| +0 | Fine sand w/ water on ice | 0.5 | 0.4 | 0.25 | |
| +0 | -------------" ------------ | 1.5 | 0.5 | 0.3 | |

**Table 3e. Measurements of dry agent (CDE with 5 vol.% water) on ice.**

| **Temp ° C** | **Surface** | **Amount per m²** | **F. coeff. start** | **F. coeff. slide** | **Remarks** |
|---|---|---|---|---|---|
| -15 | Dry agent on ice | 0.5 | 0.5 | 0.25 - 0.3 | |
| -15 | ------------" ----------- | 1.5 | 0.5 | 0.25 - 0.3 | |
| -5 | ------------" ----------- | 0.5 | 0.5 | 0.25 - 0.3 | |
| -5 | ------------" ----------- | 1.5 | 0.5 | 0.25 - 0.3 | |
| -0 | ------------" ----------- | 0.5 | 0.6 | 0.45 | |
| -0 | ------------" ----------- | 1.5 | 0.55 | 0.4 | |

| | | | | | |
|---|---|---|---|---|---|
| outside the scope of the invention | | | | | |

**Table 3f. Measurements of dry, coarse sand (0-4 mm crushed claystone with sharp edges) on ice.**

| **Temp °C** | **Surface** | **Amount per m²** | **F. coeff. start** | **F. coeff. slide** | **Remarks** |
|---|---|---|---|---|---|
| -15 | Dry coarse sand on ice | 0.5 | 0.4 - 0.5 | 0.25 - 0.3 | |
| -15 | ------------" ----------- | 1.5 | 0.5 - 0.65 | 0.3 - 0.4 | |
| -5 | ------------" ----------- | 0.5 | 0.4 - 0.5 | 0.25 - 0.3 | |
| -5 | ------------" ----------- | 1.5 | 0.5 - 0.65 | 0.3 | |
| -0 | ------------" ----------- | 0.5 | 0.5 - 0.65 | 0.3 | |
| -0 | ------------" ----------- | 1.5 | 0.5 - 0.65 | 0.35 | |

**Table 3g. Measurements of dry, fine sand (0-2 mm sand with round edges ) on ice.**

| **Temp °C** | **Surface** | **Amount per m²** | **F. coeff. start** | **F. coeff. slide** | **Remarks** |
|---|---|---|---|---|---|
| -15 | Dry fine sand on ice | 0.5 | 0.4 - 0.5 | 0.2 - 0.25 | |
| -15 | ------------" ----------- | 1.5 | 0.4 - 0.5 | 0.25 | |
| -5 | ------------" ----------- | 0.5 | 0.4 - 0.5 | 0.2 - 0.25 | |
| -5 | ------------" ----------- | 1.5 | 0.4 - 0.5 | 0.25 | |
| -0 | ------------" ----------- | 0.5 | 0.5 | 0.25 - 0.3 | |
| -0 | ------------" ----------- | 1.5 | 0.5 | 0.3 | |

**Table 3h. Measurements on varying surfaces at summer temperatures.**

| Temp C | \| Surface | F. coeff start | F. coeff. slide | Remarks |
|---|---|---|---|---|
| +10-20 | Dry and clean asphalt | 1 | 0.7 | |
| +10-20 | Dry asphalt w/dust, sand | 0.7 | 0.5 | |
| +10-20 | Coarse sand only | 0.65 | 0.45 | |
| +10-20 | Fine sand only | 0.6 | 0.4 | |
| +10-20 | Fine (real) sandpaper | 1.2 | 1 | Sandpaper grade 400 |
| +10-20 | Coarse (real) sandpaper | 1.4 | 1.3 | Sandpaper grade 120 |

The numbers for real sandpaper are included to show that it is possible to obtain coefficients of friction larger than 1, and that conditions that resemble sandpaper - at least coarse sandpaper - may cause an unwanted wear on rubber tyres.

### Comments and conclusions of table 3.

"Sandpaper surface". The agent exhibits an even and sufficient slide friction of 0.4 - 0.45 in the entire temperature range from 0 to -15 °C, and provides driving conditions that are well satisfactory (see table 2). The start friction values are also even. The tests with sand show more varying results. Use of warm sand (cf. test conducted by The National Road Administration below) show higher coefficients of friction.

"Dry spreading". The agent shows a satisfactory and even start friction (approx. 0.5) and slide friction (0.25 - 0.3). It is also important to observe that the amount of friction increasing agent (0.5/1.5 dl per m²) does not influence the friction. The most surprising and interesting observation is the slide coefficient of friction at -0 °C (0.45), which is almost twice as high compared to that of lower temperatures, cf. table 3e. This number is supported by a practical test carried out with a car at minus 1-3 °C.

### Tests conducted By Technological Institute (Teknologisk Institutt)

The agent according to the invention is, in these tests denoted "Ice-Crust", which technically is CDE with 5 % water (well within the moisture limit).

The measurements were performed as laboratory measurements on three test lanes, at two different temperatures, both with dry agent and agent plus added water. Sand was used to provide data for comparison, and volumetrically equal amounts of sand and Ice-Crust were used. As Ice-Crust has a significantly lower density than sand, 1 dl of Ice-Crust weighs only 56 g while the same volumetric amount of sand weighs 154 g. Prior to the tests the friction increasing agents were climatized in a clima chamber of 23 +/- 2 °C and with 50 +/- 5% RH (relative humidity).

The test lanes were 3.6 metres long and 0.5 metres wide. Test series 1-4 were performed with an ice temperature of approximately -8 °C and test series 5-8 with an ice temperature of approximately -1 °C. The results are shown in table 4.

**Table 4**

| **Test series** | **Lane 1 Ice only** | **Lane 2 Ice+sand** | | **Lane 3 Ice+Ice-Crust** | | **Water** | **Ice temp** | **RH** |
|---|---|---|---|---|---|---|---|---|
| | Friction (µ) | Friction (µ) | Sand (dl/m²) | Friction (µ) | Ice-Crust (dl/m²) | (dl/m²) | (°C) | (%) |
| 1 | | 0.17 | 0 | 0.18 | 0 | 0 | -8.7 | 85 |
| 1b | | 0.19 | | 0.17 | | | | |
| 2 | | 0.17 | 0.5 | 0.22 | 0.5 | 0 | -8.4 | 86 |
| 2b | | 0.17 | | 0.22 | | | | |
| 3 | | 0.18 | 1 | 0.21 | 1 | 0 | -8.3 | 86 |
| 3b | | 0.18 | | 0.21 | | | | |
| 4 | | 0.4 | 1 | 0.43 | 1 | 1 | -8 | 87 |
| 4b | | 0.39 | | 0.44 | | | | |
| 5 | 0.17 | 0.17 | 0 | 0.17 | 0 | 0 | -1 | 77 |
| 5b | 0.17 | 0.17 | | 0.17 | | | | |
| 6 | 0.15 | 0.25 | 0.5 | 0.33 | 0.5 | 0 | -1.1 | 78 |
| 6b | 0.19 | 0.25 | | 0.32 | | | | |
| 7 | 0.17 | 0.26 | 1 | 0.3 | 1 | 0 | -1.2 | 79 |
| 7b | 0.14 | 0.26 | | 0.31 | | | | |
| 8 | 0.16 | 0.53 | 1 | 0.58 | 1 | 1 | -0.8 | 80 |
| 8b | 0.17 | 0.53 | | 0.57 | | | | |

As shown by table 4 the coefficient of friction of the friction increasing agent according to the invention is higher than the friction coefficient of sand for all test series. The difference is greatest at low concentrations of the agent and strengthens the theory that the new agent may be applied in smaller amounts than conventional agents in order to reach a satisfactory friction increasing effect.

Friction is improved both for sand and the agent according to the invention when a little water is added, which effects a freezing of the agents to the ice surface (sandpaper effect). It is, however, exceptional, that higher frictions are consistently observed at -1 °C than at -8 °C, and reservations should be taken for the possibility that the results may be somewhat different in full scale and natural environments than was the case in the laboratory.

It was mentioned above that tests have been performed with heated sand, where sandpaper like surfaces have been produced. One such example is from a test lane in a cold region in Eastern Norway, the test being conducted by the National Road Administration. Sand grains (0-4 mm) with sharp edges (crushed rocks) were used for the test, that lasted for 3 days and was performed at minus 10 to minus 15 C. One of the private test cars involved in the test, was driven continuously 3-4 hours a day for the 3 days the test lasted. About 50 brake tests (friction measurements) were performed per hour, i.e. a total of about 500 brake tests. The car started with new all-year tyres, and after the test the depth of the tyre patterns was reduced to half the original depth. This indicates a surprisingly high tyre wear. The reason for such a high tyre wear may be that the combination of comparatively sharp sand grains and the grain size. The coefficient of friction was measured to 0.72 prior to the tests and reduced to 0.57 when the tests were over (wear of the surface applied with grains) which corresponds to summer driving conditions as defined by table 2.

### Practical test (without friction measurement)

Several practical tests were performed with the friction increasing agent according to the invention on short road tracks/ driveways with 1-5% inclination and use of private cars. The test were performed on bare ice/ hard snow, uphill direction at - 1 to -3 °C.

### Start test on bare ice / hard snow

Several tests were performed with dry, coarse sand in a dry state. The car wheels spun and made a shallow depression in the ice. A few handfuls of sand were applied. The sand was "kicked" away by the wheels which continued to spin. By increasing the amount of sand several times the wheels were finally able to pull themselves out of the depressions. When only minor amounts of the agent according to the invention was applied, after waiting 1-2 minutes, the wheels immediately had the friction needed to start.

### Drive test on bare ice/ hard snow

A drive test was performed with a 500 kg trailer behind a private car in a 50 m driveway with a 2% uphill inclination. With no friction increasing agent the wheels just spun. Application of sand did not help much, while application of the agent according to the invention made the car and the trailer go all the way up at the first attempt.

### Walk tests

With a dry agent (of the invention) the subjective impression was that it was safe to walk even on inclines. When the agent became moist, the friction was noticeably reduced, but not to an extent such that the shoes could no longer get a satisfactory grip.

### Transition to "sandpaper"

At all temperatures below 0 °C the sandpaper effect could be obtained rapidly, typically within one minute and often within 20 seconds.

### Transition to dry state

The areas to which the agent were supplied showed few or no marks of the agent when the ice melted away under spring time.

Tests have demonstrated that the friction increasing agent of the invention, with a controlled addition of water, provides a relatively strong agent-frozen surface at all freezing temperatures. This is probably due to the fact that water within the granules and around the granules attach the granules better to the ice when it freezes than do water around sand grains with low porosity. Thus the coefficient of friction is mainly constant within the entire relevant temperature range. The "capillary effect" of the granules occurs more rapidly when the granules contain some amounts of water from the start.

By applying or spreading the agent in a dry condition (outside the scope of the invention) in the temperature interval -0 to -5 °C, a comparatively high friction with well satisfactory driving conditions is obtained compared to lower temperatures. This effect has not been previously known.

An important advantage with the agent according to the invention is that the coefficient of friction obtained is relatively independent of the conditions under which the agent is applied, ranging from 0.4 to 0.5 when it is frozen to ice and from 0.25 to 0.3 on wet ice. (table 3b). Sand shows a lot more variation, and has, for some temperatures, a friction even as high as 0.75 (coarse sand with sharp edges) which is unnecessarily high (and may effect a high wear on tyres) while fine sand with round edges has a friction in the range 0.3 to 0.5.

A limited number of absorption materials have been tested, and it should be understood that granules based on other silicate comprising minerals must be expected to have similar properties, provided that their absorption properties are comparable and provided that they are durable when exposed to moisture. Granules will often not be durable in a "raw" state while they will be durable subsequent to calcination. It is preferred that the absorption capacity is at least 0.3 (litre water/litre absorber).

It is fully possible to combine the friction increasing agent used in the method of the invention mechanically with other agents, such as shell sand, crushed rocks etc. to obtain a further increase of friction under extreme conditions. This may be relevant e.g. for the personal market. Such combinations should however not be expected to provide any synergetic effects, and are therefore not considered to constitute preferred embodiments of the invention.

## Claims

1. Method of scattering a salt-free friction increasing agent on surfaces covered with ice or snow, comprising the step of scattering the agent on a surface, wherein the agent includes granules of a salt free friction increasing agent of a water durable, silicate absorber material chosen from the group consisting of calcined diatomaceous earth (CDE), calcined bentonite, Sepiolite and expanded perlite, and the step of applying an amount of water to the surface simultaneously with the agent or soon after the agent is applied, wherein the amount of water applied is between the moisture limit of the absorber material and the absorption limit of the absorber material.

2. Method according to claim 1, wherein the agent includes an amount of water limited to the moisture limit of the absorber material.

3. Method as claimed in claim 1 or 2, wherein the absorber granules have an absorption limit the range 0.3 - 0.5 liters liquid per liter absorber material.

4. Method as claimed in claim 1 or 2, wherein the absorber granules are able to absorb 0.1 to 0.4 liters liquid per liter absorber material before the absorber outer surface becomes moist.

## Patentansprüche

1. Verfahren zum Streuen eines salzfreien, die Reibung erhöhenden Mittels auf Oberflächen, die mit Eis oder Schnee bedeckt sind, wobei das Verfahren den Schritt des Streuens des Mittels auf eine Oberfläche, wobei das Mittel Granulat eines salzfreien, die Reibung erhöhenden Mittels eines wasserbeständigen Silicatabsorbermaterials enthält, das aus der Gruppe bestehend aus kalzinierter Diatomeenerde (KDE), kalziniertem Bentonit, Sepiolith und expandiertem Perlit ausgewählt ist, und den Schritt des Aufbringens einer Wassermenge auf die Oberfläche gleichzeitig mit dem Mittel oder kurz nach dem Aufbringen des Mittels umfasst, wobei die aufgebrachte Wassermenge zwischen der Feuchtigkeitsgrenze des Absorbermaterials und der Absorptionsgrenze des Absorbermaterials liegt.

2. Verfahren nach Anspruch 1, wobei das Mittel eine Wassermenge enthält, die auf die Feuchtigkeitsgrenze des Absorbermaterials beschränkt ist.

3. Verfahren nach Anspruch 1 oder 2, wobei das Absorbergranulat eine Absorptionsgrenze im Bereich von 0,3 - 0,5 Liter Flüssigkeit pro Liter Absorbermaterial aufweist.

4. Verfahren nach Anspruch 1 oder 2, wobei das Absorbergranulat 0,1 bis 0,4 Liter Flüssigkeit pro Liter Absorbermaterial absorbieren kann, bevor die Absorberaußenfläche feucht wird.

## Revendications

1. Procédé d'épandage d'un agent sans sel augmentant le frottement sur des surfaces recouvertes de glace ou de neige, comprenant l'étape d'épandage de l'agent sur une surface, l'agent comportant des granulés d'un agent sans sel augmentant le frottement d'un matériau absorbant de silicate, durable dans l'eau, choisi dans le groupe consistant en terre de diatomée calcinée (CDE), bentonite calcinée, Sépiolite et perlite expansée, et l'étape d'application d'une quantité d'eau sur la surface simultanément à l'agent ou peu après que l'agent a été appliqué, la quantité d'eau appliquée étant comprise entre la limite d'humidité du matériau absorbant et la limite d'absorption du matériau absorbant.

2. Procédé selon la revendication 1, dans lequel l'agent comporte une quantité d'eau limitée à la limite d'humidité du matériau absorbant.

3. Procédé selon la revendication 1 ou 2, dans lequel les granulés d'absorbant ont une limite d'absorption comprise dans la plage de 0,3 à 0,5 litres de liquide par litre de matériau absorbant.

4. Procédé selon la revendication 1 ou 2, dans lequel les granulés d'absorbant sont à même d'absorber de 0,1 à 0,4 litres de liquide par litre de matériau absorbant avant que la surface externe d'absorbant devienne humide.
